# EUROPÄISCHE PATENTSCHRIFT

(11) **EP 3 422 437 B1**
(45) Veröffentlichungstag und Bekanntmachung des Hinweises auf die Patenterteilung: **12.08.2026**
(21) Anmeldenummer: 18179280.5
(22) Anmeldetag: 22.06.2018
(51) Int. Cl.: H01M 50/107

(54) **HALTEELEMENT FÜR EINE BATTERIEZELLENANORDNUNG**
HOLDING ELEMENT FOR A BATTERY CELL ASSEMBLY
ÉLÉMENT DE RETENU POUR UN DISPOSITIF FORMANT ÉLÉMENT DE BATTERIE

(30) Priorität: 26.06.2017 DE 202017103801 U
(43) Veröffentlichungstag der Anmeldung: 02.01.2019
(73) Patentinhaber: SOLO Aircraft Engines GmbH, 71069 Sindelfingen (DE)
(72) Erfinder: Emmerich, Marc, 71069 Sindelfingen (DE); Schlesinger, Michael, 09619 Dorfchemnitz (DE); Emmerich, Wolfgang, 71069 Sindelfingen (DE)
(74) Vertreter: DREISS Patentanwälte PartG mbB

(56) Entgegenhaltungen:
- DE-A1- 102011 015 622
- DE-A1- 102015 011 898
- DE-A1- 102015 105 326
- DE-T2- 69 811 589
- JP-A- 2012 009 389
- US-A1- 2014 045 038

## Beschreibung

Die Erfindung betrifft ein Halteelement für eine Batteriezellenanordnung.

Halteelemente für Batteriezellenanordnungen sind allgemein bekannt.

Die DE 20 2016 107 089 U1 offenbart einen Batteriehalter für eine Vielzahl von stabförmigen, vorzugsweise zylinderförmigen, Batterien, insbesondere für Elektromobilitätsanwendungen umfassend: Eine erste und eine zweite Tragplatte, die jeweils eine Vielzahl nebeneinanderliegender Öffnungen mit einem einheitlichen oder im wesentlichen einheitlichen Öffnungsquerschnitt aufweisen, wobei die Öffnungen der beiden Tragplatten in Richtung der Längsachse des Batteriehalters jeweils paarweise zueinander fluchtend angeordnet sind, sodass die Batterien jeweils in eine Öffnung der ersten Tragplatte und in eine Öffnung der zweiten Tragplatte einsetzbar sind.

Die DE 10 2010 037 957 A1 offenbart einen Batteriezellenträger für mindestens eine längliche Batteriezelle bestehend aus mindestens zwei im wesentlichen parallel angeordneten Trägerteilen, wobei mindestens ein Trägerteil eine Trägerplatte mit durchgehenden und an einen Querschnitt der Batteriezellen angepassten Ausnehmungen zur Aufnahme der Batteriezellen aufweist.

Die DE 20 2014 008 335 U1 betrifft ein Akkupack für ein Elektrofahrzeug, wobei auf einer Grundplatte ein Akkumodul angeordnet ist, der aus identischen Basis-Akkumodulen aufgebaut ist, die zu größeren Untereinheiten, insbesondere einem Akku-Submodul, verbunden werden können, und zwischen der Grundplatte und dem Akkumodul und auf der anderen Seite des Akkumoduls eine Schicht aus flammhemmendem Material vorgesehen ist.

Die DE 10 2012 110 644 A1 offenbart ein elektrisches Energiespeichermodul mit mehreren Energiespeicherzellen und ein Werkzeug zum Entriegeln eines Energiespeichermoduls.

Die DE 10 2015 011 898 A1 offenbart eine Energiespeichervorrichtung, bei welcher in wenigstens zwei Packebenen jeweils eine Mehrzahl von Energiespeicherzellen zwischen wenigstens einem ersten Zellhalter und wenigstens einem zweiten Zellhalter der jeweiligen Packebene angeordnet sind.

Die DE 20 2010 017 684 U1 offenbart ein Zellenverbundsystem für mobile Leistungsgeräte. Um einen Kühlmittelstrom innerhalb des Zellenverbundes zu ermöglichen, ist in dem Zellenverbund eine Trägervorrichtung für die Batteriezellen vorgesehen, welche die Batteriezellen beabstandet im Gehäuse fixiert.

Die DE 11 2015 000 913 T5 offenbart ein Verfahren, um eine Vielzahl an Zellen, welche in einem Batteriemodul enthalten sind, zum Zeitpunkt einer Fahrzeugkollision zu schützen. Ein verletzlicher Abschnitt ist dazu ausgelegt, dass die Halteplatte entlang einer Grenze zwischen einer ersten Batteriegruppe und einer zweiten Batteriegruppe bricht, wenn der verletzliche Abschnitt die Kollisionslast aufnimmt.

Die DE 20 2011 109 863 U1 offenbart eine Haltevorrichtung zum Halten von zumindest einem elektrischen Energiespeicher mit: zumindest einer Ausnehmung zum Aufnehmen eines elektrischen Energiespeichers; und zumindest einer sich in den Innenraum der Ausnehmung erstreckenden elastischen Klemmeinrichtung zum Festklemmen des elektrischen Energiespeichers.

DE 10 2015 011 898 A1 betrifft eine Energiespeichervorrichtung, bei welcher in wenigstens zwei Packebenen eine Mehrzahl von Energiespeicherzellen zwischen Zellhaltern angeordnet ist, sowie einen Zellhalter für eine Energiespeichervorrichtung.

Mithin ist es Aufgabe der Erfindung, ein Halteelement zu schaffen, welches den Aufbau einer Batteriezellenanordnung verbessert.

Die der Erfindung zugrunde liegende Aufgabe wird durch ein Halteelement nach dem Anspruch 1 gelöst. Vorteilhafte Weiterbildungen sind in den Unteransprüchen angegeben.

Es wird ein Halteelement für eine Batteriezellenanordnung vorgeschlagen, welches umfasst: einen Aufnahmeabschnitt zur Aufnahme eines distalen Abschnitts einer Batteriezelle; und einen Festlegungsabschnitt zur Festlegung des Haltelements in einer Öffnung einer Halteplatte.

Da das vorgeschlagene Halteelement zum einen die Batteriezelle aufnimmt und zum anderen in einer Halteplatte befestigbar ist, bestimmt die Ausgestaltung der Halteplatte eine anwendungsspezifische Anzahl und Anordnung der Batteriezellen. Die Ausgestaltung der Halteplatte umfasst dabei eine Anzahl von Öffnungen zur Anordnung des Festlegungsabschnitts und die Anordnung der Öffnungen zueinander. Mithin wird ein Modulsystem geschaffen, welches hohe Freiheitsgrade bei der Ausgestaltung einzelner Batteriezellenanordnungen bietet.

Die vorgenannten Freiheitsgrade lassen sich insbesondere bei der Anpassung der Geometrie der Batteriezellenanordnung bei Applikationen mit begrenztem und verschachteltem Bauraum wie beispielsweise einem Flugzeugrumpf vorteilhaft nutzen. Darüber hinaus wird das für viele Applikationen kritische Batteriegewicht gegenüber anderen Systemen reduziert.

Insbesondere für Kleinserien erhöht das vorgeschlagene Halteelement die Wirtschaftlichkeit. Weitergehend kann ein einziges Spritzgusswerkzeug zur Herstellung des Halteelements verwendet werden. Folglich ermöglicht das vorgeschlagene Halteelement kostengünstig herstellbare Batteriezellenanordnungen.

Vorteilhaft sind der Aufnahmeabschnitt und der Festlegungsabschnitt durch eine gedachte Lotebene einer gedachten Mittenlängsachse des Halteelements voneinander getrennt. Vorteilhaft ergeben sich dadurch konstruktive Freiheitsgrade im Bereich des Aufnahmeabschnitts und des Festlegungsabschnitts. Darüber hinaus ergibt sich eine funktionale Trennung des Festlegungsabschnitts und des Aufnahmeabschnitts.

In einer vorteilhaften Ausführungsform umfasst die Grundform des Festlegungsabschnitts eine runde Außenkontur. Weitere Vorteile und Merkmale der Erfindung finden sich ferner in der nachfolgenden Beschreibung der Zeichnung. In der Zeichnung zeigen:
Figur 1 in perspektivischer Ansicht ein Halteelement für eine Batteriezellenanordnung;
Figur 2 einen schematischen Schnitt einer Batteriezellenanordnung;
Figur 3 eine perspektivische Ansicht einer beispielhaften Anordnung einer Anzahl von Halteelementen an einer jeweiligen Halteplatte; und
Figur 4 eine perspektivische Ansicht der Batteriezellenanordnung.

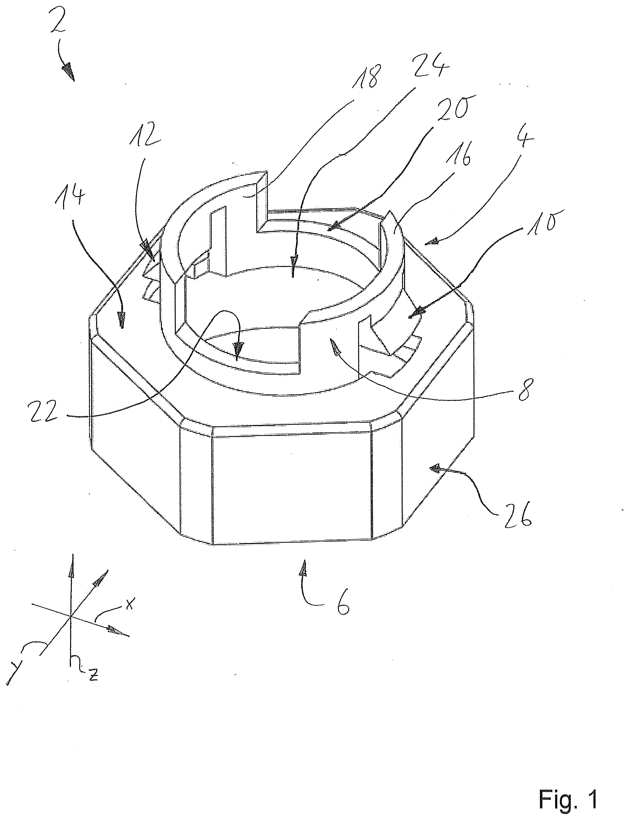

Figur 1 zeigt in perspektivischer Ansicht ein Halteelement 2 für eine Batteriezellenanordnung. Das Haltelement 2 umfasst einen in z-Richtung orientiert angeordneten Festlegungsabschnitt 4 und einen entgegen der z-Richtung orientiert angeordneten Aufnahmeabschnitt 6. Der Festlegungsabschnitt 4 ist dazu ausgebildet, um in eine korrespondierende Öffnung einer Halteplatte eingeführt zu werden und in der Öffnung festgelegt zu werden. Der Aufnahmeabschnitt 6 ist zur Aufnahme eines einzigen distalen Abschnitts einer Batteriezelle ausgebildet.

In dieser Beschreibung wird auf eine Batteriezelle Bezug genommen, wobei selbstverständlich auch eine Akkumulatorzelle von dem Begriff Batteriezelle umfasst ist.

Der Festlegungsabschnitt 4 weist eine im Wesentlichen runde Außenkonturfläche 8 auf, welche, in der korrespondierenden Öffnung der Halteplatte angeordnet, das Halteelement 2 formschlüssig entlang der x- und y-Achse also in einer xy-Ebene festgelegt. Drückt man das Halteelement 2 weiter in die Öffnung der Halteplatte hinein, so werden zwei sich gegenüberliegend angeordnete Rasterelemente 10 und 12 des Festlegungsabschnitts 4 nach innen gedrückt. Die Rastelemente 10 und 12 springen nach einer Anlage der Halteplatte an einer Gegenfläche 14 wieder in ihre ursprüngliche Form zurück und legen dadurch das Halteelement 2 formschlüssig entlang der z-Achse fest. Die kartesischen Achsen x, y und z können auch als Raumrichtungen bezeichnet werden.

Die Rastelemente 10 und 12 sind an einem jeweiligen distalen Bereich 16 und 18 des Festlegungsabschnitts 4 angeformt und ragen in proximaler Richtung, d. h. vorliegend entgegen der z-Richtung, von dem distalen Bereich 16 ab. Einführschrägen der Rastelemente 10 und 12 erleichtern das Einführen in die zugehörige Öffnung der Halteplatte und das Eindrücken der Rastelemente 10 und 12 nach innen.

Die distalen Bereiche 16 und 18 stellen distale Anlageflächen bereit, welche in einer gemeinsamen gedachten Ebene liegen. Die distalen Anlageflächen dienen zur Abstützung an einer Innenfläche eines Gehäuses oder einer anderen begrenzenden Fläche.

Zwischen den beiden distalen Bereichen 16 und 18 befinden sich in proximaler Richtung zurückspringende Ausnehmungen 20 und 22. Wird das distale Ende einer Batteriezelle in den Aufnahmeabschnitt 6 eingeführt, so ist das distale Ende der Batteriezelle über eine Durchgangsöffnung 24, welche den Festlegungsabschnitt 4 und den Aufnahmeabschnitt 6 miteinander verbindet, ausgehend von dem Festlegungsabschnitt 4 zugänglich. Vorteilhaft wird das distale Ende der Batteriezelle mit einem elektrischen Leiter kontaktiert und der elektrische Leiter wird durch die Durchgangsöffnung 24 und eine der Ausnehmungen 20, 22 in Richtung der Halteplatte oder einer elektrisch leitfähigen Platte geführt und elektrisch leitend kontaktiert. Damit ist das distale Ende der Batteriezelle in dem Halteelement 2 festgelegt und elektrisch kontaktierbar.

Der Aufnahmeabschnitt 6 ist von einer hexagon-förmigen Außenkontur 26 oder einer nicht gezeigten rechteck-förmigen insbesondere quadratischen Außenkontur umgeben, welche jeweils den Vorteil mit sich bringt, dass eine platzsparende als auch stabile Festlegung mehrerer nebeneinander angeordneter Halteelemente in einer xy-Ebene erreicht wird. Soweit Außenkonturen 26 zweier Haltelemente 2 aneinander anliegen wird die Stabilität der Anordnung verbessert. In einer anderen Ausführungsform liegen die Außenkonturen 26 zweier Halteelemente 2 nicht aneinander an. Die Außenkontur des Festlegungsabschnitts 4 springt gegenüber der Außenkontur 26 des Aufnahmeabschnitts zurück, wodurch die Gegenfläche 14 zur Anlage der Halteplatte gebildet wird. Das Haltelement 2 ist bevorzugt ein Kunststoff-Spritzgussteil.

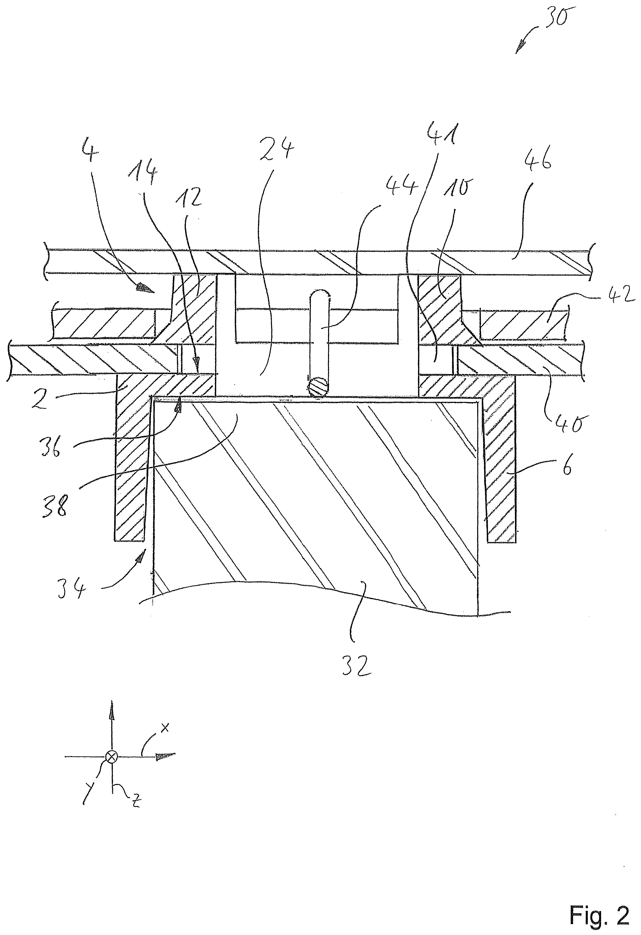

Figur 2 zeigt einen schematischen Schnitt einer Batteriezellenanordnung 30. Die Batteriezelle 32 ist in einer Öffnung 34 des Aufnahmeabschnitts 6 angeordnet. Die Öffnung 34 des Aufnahmeabschnitts 6 vergrößert sich in distaler Richtung und ist zumindest abschnittsweise konisch ausgebildet. Alternativ ist der Querschnitt der Öffnung 34 in z-Richtung konstant. Die Batteriezelle 32 ist vorliegend in der Öffnung 34 verklemmt. Alternativ oder zusätzlich ist die Batteriezelle 32 in der Öffnung 34 formschlüssig festgelegt oder verklebt. Die Öffnung 34 führt zu einer kreisringförmigen Endfläche 36, welche eine Bewegung des distalen Endes 38 der Batteriezelle 32 in z-Richtung begrenzt. Beispielsweise liegt das distale Ende 38 an der kreisringförmigen Fläche 36 an.

Die Fläche 36 zur Anlage der Batteriezelle 32 ist von der Gegenfläche 14 zur Anlage der Halteplatte 40 abgewandt angeordnet. Eine Wandung des Halteelements 2 trennt die Fläche 36 von der Gegenfläche 14, wobei die Wandung einer Lotebene einer Mittenlängsachse des Haltelements 2, welche parallel zur z-Achse verläuft, folgt. Zwei Halteplatten 40 bilden zwei Ebenen, zwischen denen die Batteriezellen 32 angeordnet sind.

Über die Rastelemente 10 und 12 und die Gegenfläche 14 ist das Halteelement 2 in einer Öffnung 41 der Halteplatte 40 und damit zu der Halteplatte 40 festgelegt. Auf der Halteplatte 40 ist eine elektrisch leitfähige Platte 42 angeordnet, welche beispielsweise mit der Halteplatte 40 verklebt ist. Das distale Ende 38 der Batteriezelle 32 ist mittels eines durch die Durchgangsöffnung 24 geführten elektrischen Leiters 44 elektrisch leitend mit der elektrisch leitfähigen Platte 42 verbunden. Über die elektrisch leitfähige Platte 42 lassen sich eine Vielzahl möglicher Schaltungen der Batteriezellen 32, d. h. Serien- und/oder Parallelschaltungen, realisieren. Durch das Vorsehen der Halteplatte 40 und der elektrisch leitfähigen Platte 42 werden Haltefunktion und Verschaltungsfunktion voneinander entkoppelt. Das Halteelement 2 liegt direkt an einer Innenwand eines Gehäuses 46 an.

In einem Beispiel ist die Halteplatte 40 elektrisch isolierend ausgebildet und die elektrisch leitfähige Platte 42 ist zumindest abschnittsweise elektrisch leitfähig ausgebildet. Insbesondere ist die Halteplatte 40 hoch flammenwidrig ausgebildet. Durch die flammenwidrige Ausbildung der Halteplatte 40 kann diese flexibler ausgebildet sein, als die leitfähige Platte 42, welche beispielsweise Metall und/oder Epoxidharz umfasst. Durch die Trennung der Platten 40 und 42 können die Eigenschaften der jeweiligen Materialien kombiniert werden. Die Halteplatte 40 ist zwischen der elektrisch leitfähigen Platte 42 und der Gegenfläche 14 des Haltelements 2 angeordnet ist. Insbesondere ist die schwer entflammbare Halteplatte 40 zwischen den Batteriezellen und der elektrisch leitfähigen Platte 42 angeordnet.

Die Halteplatte 40 besteht insbesondere zu wenigstens 60% aus Mineralfasern und zu wenigstens 10 % aus einem Thermoplast. Insbesondere umfasst die Halteplatte 20% Polyolefin. Ein erster Anteil von Mineralfasern, welche beispielsweise Aluminiumhydroxid oder Magnesiumoxid umfassen, der Halteplatte 40 ist größer als ein zweiter Anteil des Thermoplasts, welcher beispielsweise Polyolefin umfasst.

Nach Normen IEC/DIN EN 60695-11-10 und -20 und der kanadische Norm CAN/CSA C 22.2 No.017 erfüllt das Material der Halteplatte 40 höhere Anforderungen gemäß UL 94 HB, UL 94 V oder UL 94-5V als das Material des Haltelements 2 oder das Material der elektrisch leitfähigen Platte 42.

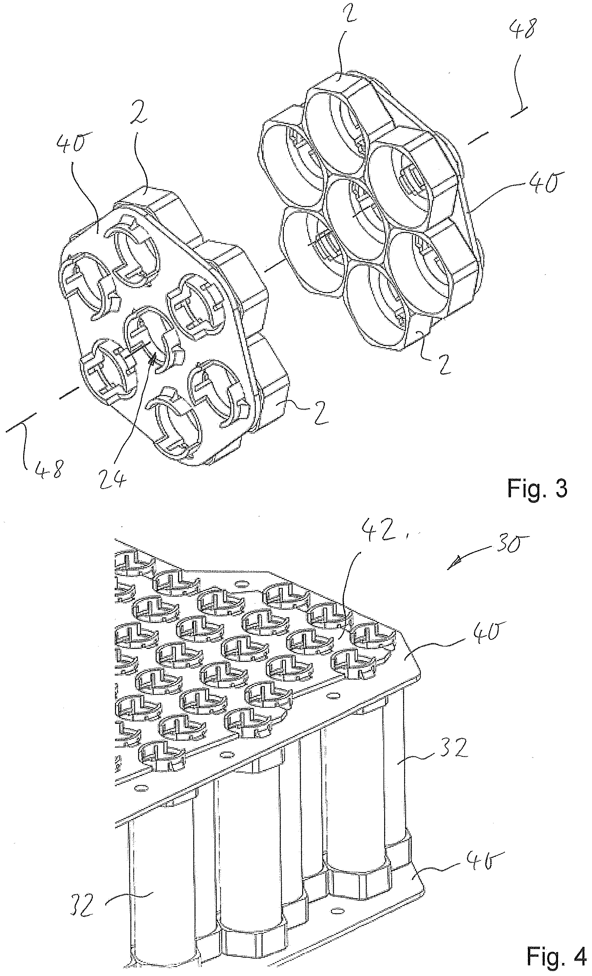

Figur 3 zeigt eine perspektivische Ansicht einer beispielhaften Anordnung einer Anzahl von Halteelementen 2 an einer jeweiligen Halteplatte 40. Zwischen zwei sich einander gegenüberliegenden Halteelementen 2 ist eine jeweilige nicht gezeigte Batteriezelle angeordnet. Zusätzlich ist beispielsweise entlang einer Mittenachse 48 ein nicht gezeigtes Befestigungselement angeordnet, welches abschnittsweise durch die jeweiligen Durchgangsöffnungen 24 geführt unter Zug steht und die beiden zugehörigen Halteelemente 2, damit die Halteplatten 40 und die Batteriezellen aufeinanderdrückt. Alternativ oder zusätzlich zu dem vorgenannten Befestigungselement sorgen die Innenflächen eines Gehäuses für den Zusammenhalt der Batteriezellenanordnung.

Benachbarte Zellhalter 2 liegen mit jeweiligen Flächen der jeweiligen hexagonalen Außenkontur 26 aneinander an, sodass der jeweilige Zellhalter 2 im Bereich des Aufnahmeabschnitts 32 Kräfte aufnimmt, diese aber nicht unmittelbar in den jeweiligen Festlegungsabschnitt einleitet. Folglich wird die Steifigkeit der Anordnung aus Figur 3 durch das Anliegen der Zellhalter 2 aneinander und die Halteplatte 40 aufgebaut. Es ergeben sich Freiheitsgrade bei der Materialwahl für das Halteelement 2. Somit kann das Halteelement 2 einen weichen Kunststoff umfassen.

Figur 4 zeigt eine perspektivische Ansicht der Batteriezellenanordnung 30, bei der die elektrisch leitfähige Platte 42 vollflächig ausgebildet ist und dadurch die Batteriezellen 32 parallel schaltet.

## Patentansprüche

1. Ein Halteelement (2) für eine Batteriezellenanordnung (30) umfassend: einen Aufnahmeabschnitt (6) zur Aufnahme eines distalen Abschnitts (38) einer Batteriezelle (32); und einen Festlegungsabschnitt (4) zur Festlegung des Haltelements (2) in einer Öffnung (41) einer Halteplatte (40), **dadurch gekennzeichnet, dass** der Aufnahmeabschnitt (6) und der Festlegungsabschnitt (4) durch eine gedachte Lotebene einer gedachten Mittenlängsachse des Halteelements (2) voneinander getrennt sind, und dass das Halteelement (2) eine Durchgangsöffnung (24) umfasst, welche den Aufnahmeabschnitt (6) und den Festlegungsabschnitt (4) miteinander verbindet.

2. Das Halteelement (2) nach dem Anspruch 1, wobei der Aufnahmeabschnitt (6) durch eine dem Festlegungsabschnitt (4) abgewandte Öffnung (34) bereitgestellt wird.

3. Das Halteelement (2) nach Anspruch 2, wobei sich der Querschnitt der Öffnung (34) des Aufnahmeabschnitts (6) in distaler Richtung vergrößert.

4. Das Haltelement (2) nach einem der vorstehenden Ansprüche, wobei der Festlegungsabschnitt (4) umfasst:
- eine Grundform zur formschlüssigen Festlegung des Halteelements (2) zu der Halteplatte (40) in eine erste und eine zweite Raumrichtung; und
- zumindest ein Rastelement (10; 12) und eine zugehörige Gegenfläche (14) zur Festlegung des Halteelements (2) zu der Halteplatte (40) in eine dritte Raumrichtung.

5. Das Haltelement (2) nach Anspruch 4, wobei das zumindest eine Rastelement (10; 12) an einem distalen Bereich (16; 18) angeformt in proximaler Richtung abragt.

6. Das Halteelement (2) nach einem der vorstehenden Ansprüche, wobei der Festlegungsabschnitt (4) zumindest eine gegenüber dem distalen Bereich (16; 18) in proximaler Richtung rückspringende Ausnehmung (20; 22) umfasst.

7. Das Haltelement (2) nach einem der vorstehenden Ansprüche, wobei das Haltelement (2) eine hexagon-förmige Außenkontur (26) umfasst.

8. Das Halteelement (2) nach einem der Ansprüche 1 bis 6, wobei das Halteelement (2) eine rechteck-förmige Außenkontur umfasst.

9. Das Haltelement (2) nach dem Anspruch 7 oder 8, wobei die hexagon-förmige Außenkontur (26) oder die recheckförmige Außenkontur den Aufnahmeabschnitt (6) umgibt.

10. Das Haltelement (2) nach einem der vorstehenden Ansprüche, wobei die Außenkontur (8) des Festlegungsabschnitts (4) gegenüber der Außenkontur (26) des Aufnahmeabschnitts (6) zurückspringt.

11. Eine Batteriezellenanordnung (30) umfassend:
- eine erste Anzahl und eine zweite Anzahl von Halteelementen (2) nach einem der vorstehenden Ansprüche;
- eine erste Halteplatte (40), in deren Öffnungen (41) jeweilige Festlegungsabschnitte (4) der ersten Anzahl der Halteelemente (2) angeordnet sind;
- eine zweite Halteplatte (40), in deren Öffnungen (41) jeweilige Festlegungsabschnitte (4) der zweiten Anzahl der Halteelemente (2) angeordnet sind; und
- eine Anzahl von Batteriezellen (32), wobei die distalen Enden (38) der jeweiligen Batteriezelle (32) in den Aufnahmeabschnitten (6) zweier sich gegenüberliegender Haltelemente (2) aufgenommen sind.

12. Die Batteriezellenanordnung (30) nach dem Anspruch 11, wobei die erste und/oder die zweite Halteplatte (40) elektrisch leitend ausgebildet sind, und wobei eines der distalen Enden (38) der jeweiligen Batteriezelle (32) mittels eines elektrischen Leiters (44) mit der zugeordneten ersten und/oder zweiten Halteplatte (40) elektrisch leitend verbunden ist.

13. Die Batteriezellenanordnung (30) nach dem Anspruch 11 oder 12, wobei eine elektrisch leitfähige Platte (42) auf der ersten und/oder zweiten Halteplatte (40) insbesondere auf der von den Batteriezellen (32) abgewandten Seite der Halteplatte (40) angeordnet ist, und wobei eines der distalen Enden (38) der jeweiligen Batteriezelle (32) mittels eines elektrischen Leiters (44) mit der zugeordneten elektrisch leitfähigen Platte (42) elektrisch leitend verbunden ist.

## Claims

1. Retaining element (2) for a battery cell assembly (30) comprising: a receiving portion (6) for receiving a distal portion (38) of a battery cell (32); and a fixing portion (4) for fixing the retaining element (2) in an opening (41) of a retaining plate (40), **characterized in that** the receiving portion (6) and the fixing portion (4) are separated from each other by an imaginary perpendicular plane of an imaginary central longitudinal axis of the retaining element (2), **and in that** the retaining element (2) has a through opening (24) which interconnects the receiving portion (6) and the fixing portion (4).

2. Retaining element (2) according to claim 1, wherein the receiving portion (6) is provided by an opening (34) facing away from the fixing portion (4).

3. Retaining element (2) according to claim 2, wherein the cross section of the opening (34) of the receiving portion (6) increases in the distal direction.

4. Retaining element (2) according to any of the preceding claims, wherein the fixing portion (4) comprises:
- a basic shape for interlockingly fixing the retaining element (2) to the retaining plate (40) in a first and a second spatial direction; and
- at least one locking element (10; 12) and an associated mating surface (14) for fixing the retaining element (2) to the retaining plate (40) in a third spatial direction.

5. Retaining element (2) according to claim 4, wherein the at least one locking element (10; 12) is integrally formed in a distal region (16; 18) and projects in a proximal direction.

6. Retaining element (2) according to any of the preceding claims, wherein the fixing portion (4) has at least one recess (20; 22) which is set back in the proximal direction relative to the distal region (16; 18).

7. Retaining element (2) according to any of the preceding claims, wherein the retaining element (2) has a hexagonal outer contour (26).

8. Retaining element (2) according to any of claims 1 to 6, wherein the retaining element (2) has a rectangular outer contour.

9. Retaining element (2) according to claim 7 or 8, wherein the hexagonal outer contour (26) or the rectangular outer contour surrounds the receiving portion (6).

10. Retaining element (2) according to any of the preceding claims, wherein the outer contour (8) of the fixing portion (4) is set back relative to the outer contour (26) of the receiving portion (6).

11. Battery cell assembly (30) comprising:
- a first number and a second number of retaining elements (2) according to any of the preceding claims;
- a first retaining plate (40), in the openings (41) of which relevant fixing portions (4) of the first number of retaining elements (2) are arranged;
- a second retaining plate (40), in the openings (41) of which relevant fixing portions (4) of the second number of retaining elements (2) are arranged; and
- a number of battery cells (32), wherein the distal ends (38) of each battery cell (32) are received in the receiving portions (6) of two opposing retaining elements (2).

12. Battery cell assembly (30) according to claim 11, wherein the first and/or the second retaining plate (40) are electrically conductive, and wherein one of the distal ends (38) of the relevant battery cell (32) is electrically conductively connected to the associated first and/or second retaining plate (40) by an electrical conductor (44).

13. Battery cell assembly (30) according to claim 11 or 12, wherein an electrically conductive plate (42) is arranged on the first and/or second retaining plate (40), in particular on the side of the retaining plate (40) facing away from the battery cells (32), and wherein one of the distal ends (38) of the relevant battery cell (32) is electrically conductively connected to the associated electrically conductive plate (42) by an electrical conductor (44).

## Revendications

1. Un élément de maintien (2) pour un agencement de cellules de batterie (30) comprenant : une section d'accueil (6) destinée à recevoir une section distale (38) d'une cellule de batterie (32) ; et une section de fixation (4) pour la fixation de l'élément de maintien (2) dans une ouverture (41) d'une plaque de maintien (40), **caractérisé en ce que** la section d'accueil (6) et la section de fixation (4) sont séparées l'une de l'autre par un plan perpendiculaire à un axe longitudinal médian imaginaire de l'élément de maintien (2), et **en ce que** l'élément de maintien (2) comprend une ouverture traversante (24) qui met en communication la section d'accueil (6) et la section de fixation (4).

2. L'élément de maintien (2) selon la revendication 1, dans lequel la section d'accueil (6) est réalisée par une ouverture (34) s'ouvrant dans la direction opposée à la section de fixation (4).

3. L'élément de maintien (2) selon la revendication 2, dans lequel la section transversale de l'ouverture (34) de la section d'accueil (6) s'élargit en direction distale.

4. L'élément de maintien (2) selon l'une quelconque des revendications précédentes, dans lequel la section de fixation (4) comprend :
- une forme de base permettant la fixation positive de l'élément de maintien (2) à la plaque de maintien (40) dans une première et une deuxième direction spatiale ; et
- au moins un élément de verrouillage (10; 12) et une surface correspondante (14) pour la fixation de l'élément de maintien (2) à la plaque de maintien (40) dans une troisième direction spatiale.

5. L'élément de maintien (2) selon la revendication 4, dans lequel ledit élément de verrouillage (10; 12) est formé sur une zone distale (16; 18) et saillant en direction proximale.

6. L'élément de maintien (2) selon l'une quelconque des revendications précédentes, dans lequel la section de fixation (4) comprend au moins une encoche (20; 22) reculée en direction proximale par rapport à la zone distale (16; 18).

7. L'élément de maintien (2) selon l'une quelconque des revendications précédentes, dans lequel l'élément de maintien (2) comprend un contour extérieur (26) de forme hexagonale.

8. L'élément de maintien (2) selon l'une quelconque des revendications 1 à 6, dans lequel l'élément de maintien (2) comprend un contour extérieur de forme rectangulaire.

9. L'élément de maintien (2) selon la revendication 7 ou 8, dans lequel le contour extérieur (26) de forme hexagonale ou le contour extérieur de forme rectangulaire entoure la section d'accueil (6).

10. L'élément de maintien (2) selon l'une quelconque des revendications précédentes, dans lequel le contour extérieur (8) de la section de fixation (4) est en retrait par rapport au contour extérieur (26) de la section d'accueil (6).

11. Un agencement de cellules de batterie (30) comprenant :
- un premier nombre et un second nombre d'éléments de maintien (2) selon l'une quelconque des revendications précédentes ;
- une première plaque de maintien (40), dans les ouvertures (41) de laquelle sont disposées les sections de fixation (4) respectives du premier nombre d'éléments de maintien (2) ;
- une seconde plaque de maintien (40), dans les ouvertures (41) de laquelle sont disposées les sections de fixation (4) respectives du second nombre d'éléments de maintien (2) ; et
- un nombre de cellules de batterie (32), les extrémités distales (38) de chaque cellule de batterie (32) étant reçues dans les sections d'accueil (6) de deux éléments de maintien (2) opposés.

12. L'agencement de cellules de batterie (30) selon la revendication 11, dans lequel la première et/ou la seconde plaque de maintien (40) sont électriquement conductrices, et dans lequel l'une des extrémités distales (38) de chaque cellule de batterie (32) est reliée électriquement à la première et/ou à la seconde plaque de maintien (40) qui lui est associée au moyen d'un conducteur électrique (44).

13. L'agencement de cellules de batterie (30) selon la revendication 11 ou 12, dans lequel une plaque électriquement conductrice (42) est disposée sur la première et/ou la seconde plaque de maintien (40), notamment sur la face de la plaque de maintien (40) opposée aux cellules de batterie (32), et dans lequel l'une des extrémités distales (38) de chaque cellule de batterie (32) est reliée électriquement à la plaque électriquement conductrice (42) qui lui est associée au moyen d'un conducteur électrique (44).
